# FASCICULE DE BREVET EUROPEEN

(11) **EP 0 750 724 B1**
(45) Date de publication et mention de la délivrance du brevet: **02.06.1999**
(21) Numéro de dépôt: 94909979.0
(22) Date de dépôt: 17.03.1994
(51) Int. Cl.: F16F 9/48, F16F 9/46, F16F 9/43

(54) **DISPOSITIF OLEOPNEUMATIQUE D'AMORTISSEMENT MODULABLE, AVEC POSSIBILITE DE REGLAGE**
REGEL- UND MODULIERBARE HYDROPNEUMATISCHE DÄMPFUNGSVORRICHTUNG
ADJUSTABLE VARIABLE OLEOPNEUMATIC SHOCK ABSORBING DEVICE

(43) Date de publication de la demande: 02.01.1997
(73) Titulaire: Ricard, André, 73000 Bassens (FR)
(72) Inventeur: Ricard, André, 73000 Bassens (FR)
(74) Mandataire: Vuillermoz, Bruno
(86) Numéro de dépôt international: FR9400294
(87) Numéro de publication internationale: WO9525232

(56) Documents cités:
- DE-A- 1 780 323
- DE-A- 3 249 313
- FR-A- 1 004 261
- FR-A- 1 402 818
- FR-A- 2 418 392
- GB-A- 533 048
- US-A- 2 148 497
- US-A- 2 212 541
- US-A- 2 959 410
- US-A- 3 445 103
- US-A- 4 623 049
- PATENT ABSTRACTS OF JAPAN vol. 7, no. 177 (M-233) (1322) 5 Août 1983 & JP,A,58 081 241 (ATSUGI JIDOUSHIYA BUHIN KK) 16 Mai 1983

## Description

La présente invention a trait à un nouveau dispositif oléopneumatique d'amortissement modulable selon le préambule de la revendication 1 et qui ressort du document JP-A-58 081 241. Ce dispositif, avec possibilité de réglage, peut être utilisé non seulement pour réaliser des suspensions de véhicules tels que automobiles, motos, cycles, mais également dans toutes les installations nécessitant l'utilisation d'un système d'amortissement tel que machine et outillage industriel agricole et de travaux publics, camions, remorques, engins de levage et de manutention, systèmes d'ouverture ou de fermeture.

Les dispositifs d'amortissement oléopneumatique sont bien connus et sont utilisés dans de nombreux secteurs techniques.

Les solutions proposées à ce jour sont cependant relativement complexes, très sensibles à l'usure, perdent rapidement leur efficacité et souvent, ne permettent d'obtenir un amortissement que dans une seule direction. Par ailleurs, l'intensité de l'amortissement est en général déterminée lors de la fabrication et il est difficile de réaliser un réglage individualisé en fonction des besoins et, à plus forte raison, de réaliser un tel réglage même pendant le fonctionnement.

Or on a trouvé, et c'est ce qui fait l'objet de la présente invention, une solution simple, qui permet de résoudre ces problèmes, solution qui peut être utilisée soit seule soit être intégrée à des ensembles d'amortissement et/ou de suspension.

Les dispositifs oléopneumatiques d'amortissement sont, d'une manière générale, constitués par un ensemble destiné à être interposé entre un élément porteur et une partie à suspendre, et qui comporte essentiellement un cylindre rempli d'un liquide (huile par exemple), relié à l'élément porteur (ou à l'élément à suspendre), et à l'intérieur duquel peut se déplacer un piston dont la tige est reliée à l'élément porteur (ou à la partie à suspendre). Le piston comporte des ajuttages calibrés équipés de clapets, ce qui permet, lors des déplacements dudit piston, de freiner plus ou moins énergiquement les déplacements, par exemple les oscillations de la suspension. Par ailleurs, le cylindre renferme également un second piston dit "piston libre", qui permet de définir à l'intérieur du cylindre une chambre contenant un gaz sous pression (azote par exemple).

Comme indiqué précédemment, de tels amortisseurs oléopneumatiques sont de conception complexe, perdent leur qualité dès qu'apparaît un peu d'usure, et ne permettent pas toujours d'obtenir un amortissement efficace, et ce aussi bien dans la course aller que dans la course retour, ni un réglage pendant le fonctionnement. De plus, les amortisseurs actuels atténuent les vibrations, mais celles-ci restent toujours gênantes. Par ailleurs, les débattements provoqués par les défectuosités de la route sont mal absorbés.

Le dispositif selon l'invention permet de résoudre ces problèmes.

D'une manière générale, le dispositif selon l'invention comprend un corps ou cylindre rempli de liquide hydraulique (huile par exemple), auquel est associé un ensemble déplaçable sous l'action de contraintes extérieures et qui permet de provoquer une circulation du liquide hydraulique lors des déplacements relatifs entre ces deux parties, et dans lequel:
- l'ensemble déplaçable est constitué par un piston mobile évidé dont l'action entraîne le liquide hydraulique, ce piston dont la périphérie coulisse contre la paroi interne du corps ou cylindre étant monté à l'extrémité d'une tige ou poussoir comportant un évidement longitudinal permettant de former une chambre pour le liquide hydraulique, ledit évidement renfermant du côté opposé à son extrémité ouverte un élément dit "piston libre" séparant ledit liquide hydraulique d'une réserve de gaz ;
- la circulation du liquide lors du déplacement du piston - poussoir sous l'action d'une contrainte, s'effectue entre une réserve définie par la paroi interne du cylindre et l'évidement longitudinal du poussoir, au travers d'un canal de transfert à débit variable défini par la section interne du piston, et la surface extérieure d'un élément "régulateur" constitué par une tige de section variable dont la base est associée au corps ou cylindre de l'ensemble, et dont le profil extérieur est tel que lors de l'interpénétration dudit régulateur dans l'évidement interne du piston, permet de faire varier la section de l'espace annulaire que le liquide emprunte lors des déplacements relatifs du poussoir - piston par rapport à l'ensemble corps/régulateur.

Le dispositif selon l'invention se caractérise en ce que les déplacements relatifs s'effectuent de part et d'autre d'une position où l'espace annulaire est le plus important, permettant d'obtenir une variation de section apportant un amortissement modulable, par exemple progressif tout au long de la course, et ce aussi bien dans la course aller que dans la course retour ;
- le régulateur possédé des lumières permettant le passage du liquide par l'intérieur dudit régulateur pour le transfert de la réserve à la chambre et inversement ;
- le piston libre permet de compenser les écarts de volume dus au déplacement des éléments du dispositif.

Par ailleurs, conformément à l'invention, la chambre renfermant le gaz est équipée d'une valve, par exemple du type "valve pour chambre à air de bicyclette", permettant ainsi de régler à l'aide d'une pompe la souplesse de suspension souhaitée.

De plus l'effet d'amortissement peut être amélioré en disposant entre le piston et le fond du corps un "coussin" pneumatique ou élément équivalent tel qu'un bloc compressible.

Des moyens sont par ailleurs prévus pour éviter la rotation du poussoir à l'intérieur du corps, moyens constitués par exemple par une rainure sur la face externe du poussoir, dans laquelle coulisse un patin solidaire du corps, cette rainure délimitant la course.

La forme de la section du corps et du piston poussoir, peut être soit cylindrique, soit être autre, par exemple ovale, multipans, de manière à permettre la translation des parties mobiles tout en évitant leur rotation l'une par rapport à l'autre. Dans un tel cas, la course est limitée par une butée constituée par une pièce solidaire du corps, dont la partie haute est alors épaulée afin d'empêcher que le poussoir ne s'échappe de son logement.

L'invention et les avantages qu'elle apporte sera cependant mieux comprise grâce aux exemples de réalisation donnés ci-après à titre indicatif, mais non limitatif, et qui sont illustrés par les schémas annexés dans lesquels :
- la figure 1 illustre vue en coupe la structure générale d'une forme de réalisation à partir de l'état de la technique connu d'un dispositif d'amortissement oléopneumatique, progressif, à double effet, avec possibilité de réglage constituant la structure de base du dispositif réalisé conformément à l'invention ;
- la figure 2 illustre l'application d'un tel dispositif comme élément amortisseur intégré dans la tige existante d'une selle de cycle ;
- la figure 3 illustre l'application d'un tel dispositif comme piston d'un amortisseur classique ;
- et la figure 4 illustre une autre forme d'application d'un tel dispositif comme élément contacteur antidéflagrant intégré dans un système de sécurité ;
- les figures 5,6 et 7 illustrent différentes variantes de régulateurs du dispositif illustré à la figure 1, variantes faisant l'objet des revendications et qui sont utilisables pour les mêmes applications que le dispositif illustré à la figure 1 qui, quant à lui, n'est pas revendiqué.

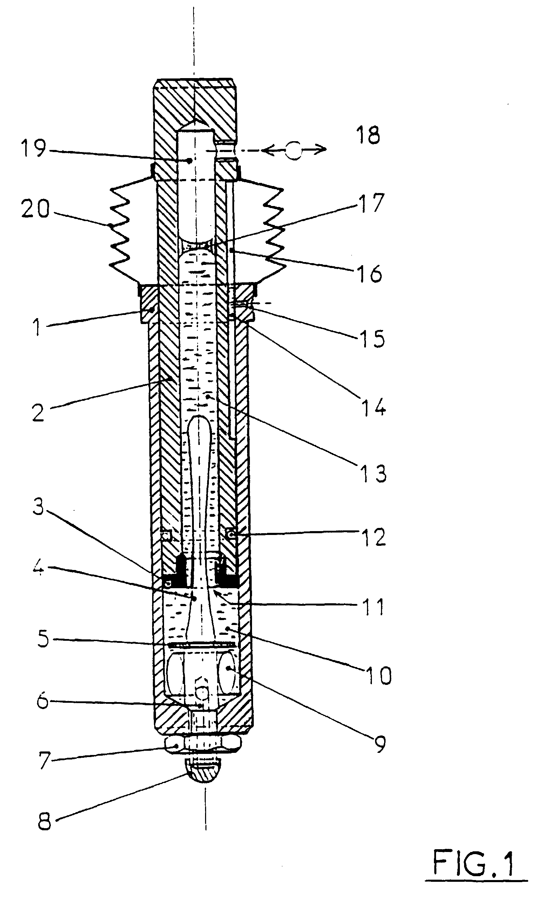

Si l'on se reporte aux schémas annexés, et plus particulièrement à la figure 1, le dispositif conforme à l'invention se compose donc essentiellement d'un corps (1) dans lequel coulisse une tige ou poussoir (2) solidaire d'un piston évidé (3), l'étanchéité étant avantageusement obtenue par un joint (12). Un régulateur (4) de forme appropriée à la courbe d'amortissement recherchée, limite progressivement le débit de liquide situé dans la réserve (10) du corps (1) à travers le canal de transfert (11) remplissant ou vidant la chambre (13), ce qui a pour effet d'agir sur le piston libre (17) qui fait varier le volume et la pression du gaz contenue dans la réserve (19). Une valve (18) permet de remplir ou de vider le gaz.

Dans cette forme de réalisation, le guidage en translation est obtenu par un patin (14) qui coulisse dans une rainure (16) du poussoir (2) évitant la rotation de l'ensemble : corps (1) et poussoir (2). Une vis (15) maintient le patin (14), qui détermine la course en translation et évite toute possibilité au poussoir de s'échapper du corps (1). Un conduit interne (6) permet le remplissage et/ou le vidage du liquide hydraulique sans démontage du dispositif. Un bouchon (8) permet d'obturer la sortie du canal (6). Un coussin amortisseur additionnel (9) est maintenu en position à l'intérieur du corps grâce à une rondelle (5). Un soufflet (20) évite les contacts avec les corps étrangers, poussières, eau ... . Un écrou (7) rend solidaire le régulateur (4) du corps (1). L'ensemble piston/poussoir (3)/(2) et le régulateur (4) n'étant jamais en contact, il n'y a donc pas usure des pièces.

Un tel ensemble de conception particulièrement simple permet d'obtenir un amortissement progressif à double effet, et ce grâce essentiellement au régulateur (4) qui constitue la pièce maîtresse d'un tei dispositif, pièce de conception simple, facile à réaliser, avec des machines classiques. Ce régulateur (4) permet selon sa forme d'obtenir un amortissement modulable. Par exemple, la forme du régulateur (4) illustrée à la figure 1 permet d'avoir le maximum de souplesse dans la position médiane du piston, l'espace annulaire (11) étant alors le plus important et de donner, de part et d'autre de cette position médiane, un amortissement progressif, de plus en plus ferme, jusqu'à la fin de la course et ce, aussi bien dans un sens que dans l'autre. En faisant varier la forme du régulateur (4), on peut donc ainsi obtenir des courbes diverses d'amortissement en fonction des besoins et applications.

La position relative du régulateur (4) et du piston (3)/poussoir (2) autorise, dans la partie centrale de la course, le passage d'une quantité maximale de liquide ; lors de l'interpénétration de ces deux éléments, lorsque la section du canal de transfert (11) diminue, le liquide circule moins facilement, ce qui freine le déplacement ; lorsque le piston parvient vers les extrémités du régulateur, le déplacement est de plus en plus ralenti jusqu'à l'arrêt provoqué par la fermeture du canal de transfert (11).

De plus, l'amortissement est obtenu sans que les pièces qui le provoquent ne soient en contact, donc sans usure. Cette conception du dispositif lui assure une très grande longévité tout en gardant toutes ses caractéristiques premières.

En ce qui concerne le liquide hydraulique, le choix de la viscosité permet d'obtenir pour une même torme de régulateur une plus ou moins grande fermeté d'amortissement.

La partie pneumatique constituée par le coussin (9) permet d'absorber les chocs intenses et de restituer progressivement cette énergie en concordance avec l'effet du régulateur (4). L'autre partie pneumatique constituée par la réserve (19) située dans le poussoir (2) permet de régler le dispositif en fonction de la charge. Ce montage permet également de compenser les différences de volume interne au système, résultant des déplacements relatifs : piston/poussoir/régulateur.

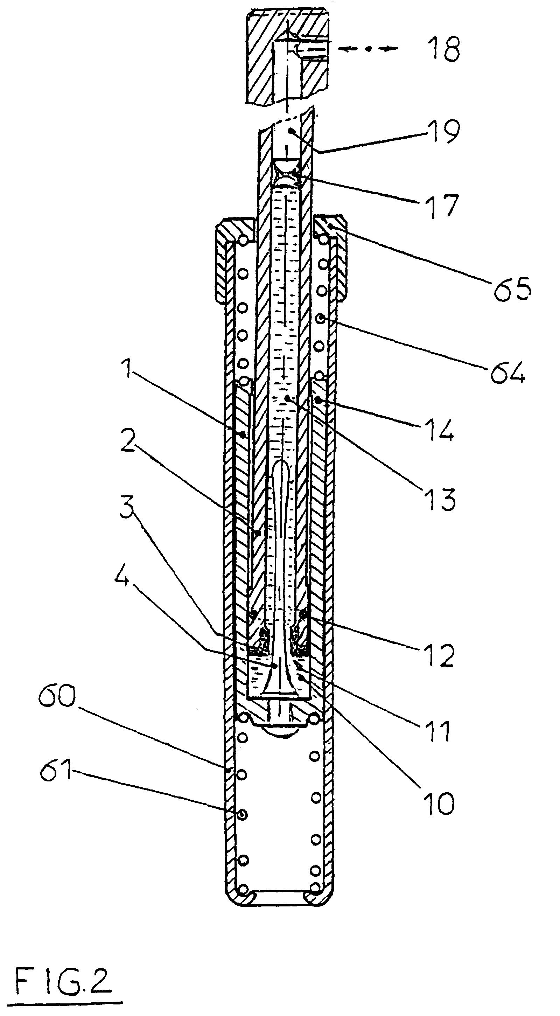

Un tel ensemble peut être utilisé dans de nombreuses applications, par exemple pour réaliser un système amortisseur d'une selle de cycle. Dans ce cas, on peut l'utiliser tel que en ie montant aux lieu et place de la tige de selle elle-même, ou, comme illustré à la figure 2, en l'intégrant à l'intérieur de la tige (60) d'une telle selle. Dans ce cas, le dispositif est intégré à l'intérieur de la tige (60) et est maintenu entre deux butées déformables (61) et (64) par l'intermédiaire d'un bouchon (65). Un tel montage permet d'absorber des chocs encore plus importants.

Dans une telle application, quand l'utilisateur installé sur son cycle dont la selle est fixée sur le poussoir (2), rencontre une dénivellation du sol, par exemple une bosse, il se produit, au moment de la rencontre de l'obstacle, un choc absorbé en partie par la roue et l'ensemble du cycle ; mais ce dernier est dévié vers le haut. C'est à cet instant que le dispositif entre en action, ce qui permet au cycliste d'être maintenu au plus près de la trajectoire idéale, avec le moins de heurts possibles. A la rencontre de l'obstacle, le cadre est dévié vers le haut, entraînant le corps (1) du dispositif qui lui est solidaire, alors que l'ensemble cycliste-selle-poussoir (2)-piston (3) s'oppose à ce déplacement qui, simultanément, comprime le gaz contenu dans la chambre (19) permettant au liquide sous pression contenu dans la réserve (10) du corps (1) d'être chassé dans la partie creuse (13) du poussoir (2) par le canal de transfert (11) dont le débit varie en fonction de la position relative piston (3)/régulateur (4) et selon le profil prédéterminé de ce dernier, donnant ainsi un amortissement variable, mouillable en fonction de son profil, de sa forme, sans que le piston (3)-poussoir (2) ne soit en contact avec le régulateur (4) donc sans usure. Ainsi, selon la forme préférentielle du régulateur (4) du dispositif selon l'invention : lorsque le régulateur solidaire du corps (1) se rapproche du piston (3) en direction du point mort bas, le liquide qui doit passer entre piston (3) et régulateur (4) est freiné par l'augmentation de la section de ce dernier, ce qui produit un ralentissement progressif jusqu'à l'arrêt de la course. Simultanément, le liquide emplit en partie la chambre (13) du poussoir (2) comprimant le gaz par l'intermédiaire du piston libre (17). Lors de la phase suivante : descente de l'obstacle pour le maintien ou le retour à la trajectoire idéale, l'ensemble piston (3)-poussoir (2)-selle-cycliste, se trouve libéré de la poussée du cadre sur lequel est fixé le corps (1) du dispositif ; le gaz comprimé se détend en repoussant par l'intermédiaire du piston libre (17) le liquide contenu dans la chambre (13) du poussoir (2), le chassant vers la partie basse du corps, accompagnant et poussant vers le haut l'ensemble piston-poussoir-selle -cycliste, d'un mouvement qui s'atténuera progressivement jusqu'à la position de confort optimum pour le cycliste ; confort obtenu par un réglage individualisé de la pression du gaz. La position de confort ne sera changée que par une nouvelle sollicitation du dispositif.

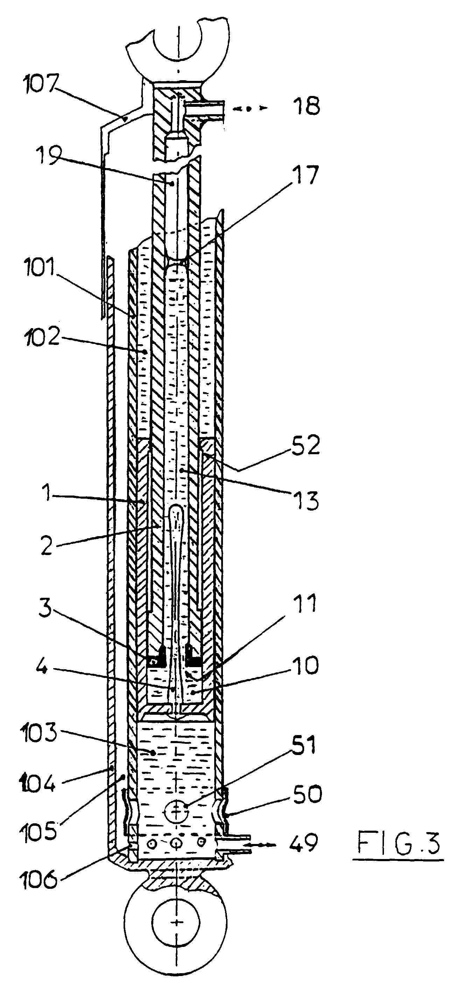

La figure 3 illustre une autre application du dispositif qui est utilisé pour être substitué à un piston conventionnel d'un ensemble existant tel que par exemple un amortisseur traditionnel. Le corps (1) du dispositif constitue alors l'extérieur du "piston-coulisseau", qui peut se déplacer dans le cylindre intérieur (101) du dispositif existant et qui permet donc d'obtenir un amortissement progressif à double effet en tous points de la course.

Dans cette forme de réalisation, une butée (52) est placée sur le piston coulisseau (1) et limite la course en translation du poussoir (2).

L'ensemble du dispositif baignant dans le liquide hydraulique du système existant, le "piston-coulisseau" possède sur sa surface extérieure des passages calibrant l'écoulement du liquide entre la chambre inférieure (103) et la chambre supérieure (102), permettant d'obtenir une répartition régulière des surfaces de contact du pourtour de ce piston-coulisseau. Au bas du cylindre intérieur (101), sont situés des passages de transfert (106) permettant au liquide hydraulique de circuler de la chambre (103) vers la réserve (105) ou vers le conduit collecteur (49) et inversement, cette dernière réserve étant contenue dans le tube extérieur (104) qui est coiffé d'une protection pare poussière (107). Un clapet de décharge formé d'une bague (50) pouvant se déformer en cas de surpression dans la réserve (103), laisse échapper-une quantité supplémentaire de liquide par les orifices (51) du cylindre (101) constituant ainsi l'organe de sécurité.

Un tel dispositif peut être monté à l'intérieur de tout appareil, suspension, vérin, etc.., et constitue alors un amortisseur intégré. Toutes les parties étant largement lubrifiées, et un tel ensemble ne nécessitant aucun joint supplémentaire, ceci permet d'obtenir une très grande fiabilité. C'est dans cette application que le dispositif apporte une importante amélioration de l'absorption des vibrations ; il annule des chocs d'intensité moyenne.

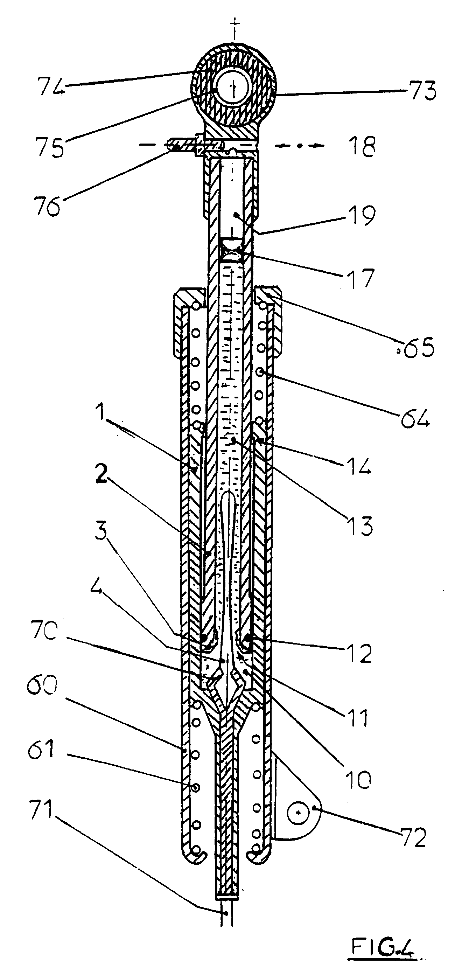

La figure 4 illustre, vue en coupe schématique, une autre forme d'application d'un tel ensemble pour réaliser en complément de l'effet d'amortissement la fonction de contacteur antidéflagrant pour un système de sécurité, par exemple coupure du courant électrique dès l'ouverture d'une porte de visite.

Dans cette application, et comme illustré dans cette figure, le dispositif selon l'invention est installé entre deux supports élastiques (61) et (64). Le corps (1) est en matière non conductrice du courant électrique et se prolonge à l'opposé du poussoir (2) pour maintenir et protéger l'élément conducteur contact (70) qui s'y trouve inséré, laissant dépasser à son extrémité une partie formant la borne (71). Sur l'extrémité intérieure du poussoir (2), est monté, comme précédemment, le piston (3) qui, dans cette forme de réalisation, constitue aussi une pièce de contact destinées à venir toucher le contact (70) fermant ou ouvrant ainsi le circuit électrique.

Le liquide hydraulique situé dans la réserve (10) est également diélectrique, ce qui empêche l'amorçage au moment de l'accostage des contacts (3) (70), contacts parfaitement réalisés grâce à leurs formes complémentaires. Le maintien en position du corps (1) est obtenu à l'aide de ressorts (61) (64), ces derniers prenant place de part et d'autre du dispositif, d'un côté en butée dans la cuvette du tube de l'enveloppe (60), et de l'autre maintenu en position par le bouchon fileté (65). Le réglage de pression sur les contacts (3) et (70) peut être obtenu en modifiant les dimensions de l'entraxe des fixations (72) (75) par réglage de la tension des ressorts (61) (64) réalisé par déplacement de l'embout fileté (65). L'élément (73) sur lequel est assemblée la borne (76) est vissée sur le poussoir (2). L'élément central (75) de l'attache est lié à l'élément (73) par un noyau isolant (74). Pour des raisons de sécurité, le régulateur (4) serti à sa base dans le conducteur contact (70), est réalisé en matière isolante. De même, l'enveloppe (60) peut être recouverte ou construite en matériau isolant.

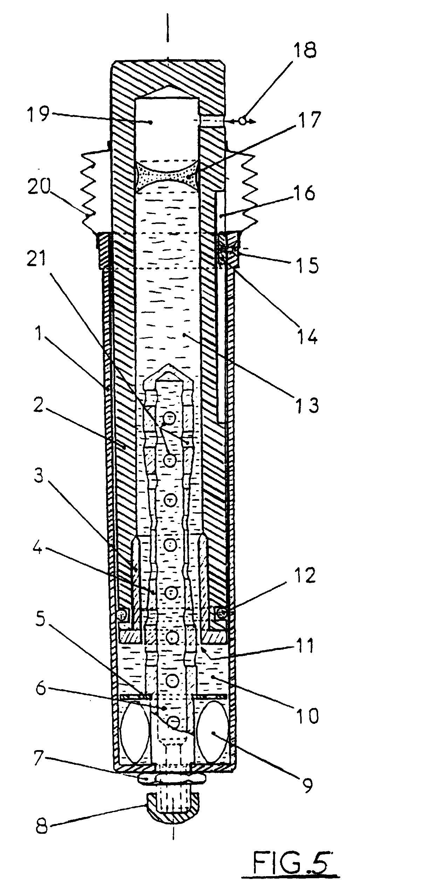

Les figures 5,6 et 7 illustrent trois variantes du régulateur (4) entrant dans la réalisation du dispositif conforme à l'invention et faisant l'objet des revendications, ces modes de réalisation étant utilisables au lieu et place du régulateur illustré à la figure 1 et utilisé dans les applications des figures 2,3 et 4.

Dans la première variante illustrée par la figure 5, le régulateur (4) comporte outre les éléments déjà décrits dans la forme de réalisation illustrée par la figure 1, des lumières (21) qui autorisent le passage du liquide par l'intérieur, ce qui permet d'apporter un gain de poids pour les réalisations de dispositifs de grandes dimensions, en permettant d'augmenter la quantité du liquide hydraulique facilitant aussi les échanges thermiques.

Dans cette forme de réalisation, le régulateur (4) est constitué d'un corps creux avec des lumières (21) permettant le passage du liquide de la réserve (10) à la chambre (13) et inversement. Dans la partie médiane de la course, le débit du canal de transfert (11) est au maximum, les lumières (21) permettant un passage optimum du liquide, ce qui donne la souplesse du dispositif. Lorsque dans sa course, le piston (3) approche les extrémités du régulateur (4), les lumières (21) sont obturées progressivement, ce qui apporte le ralentissement progressif.

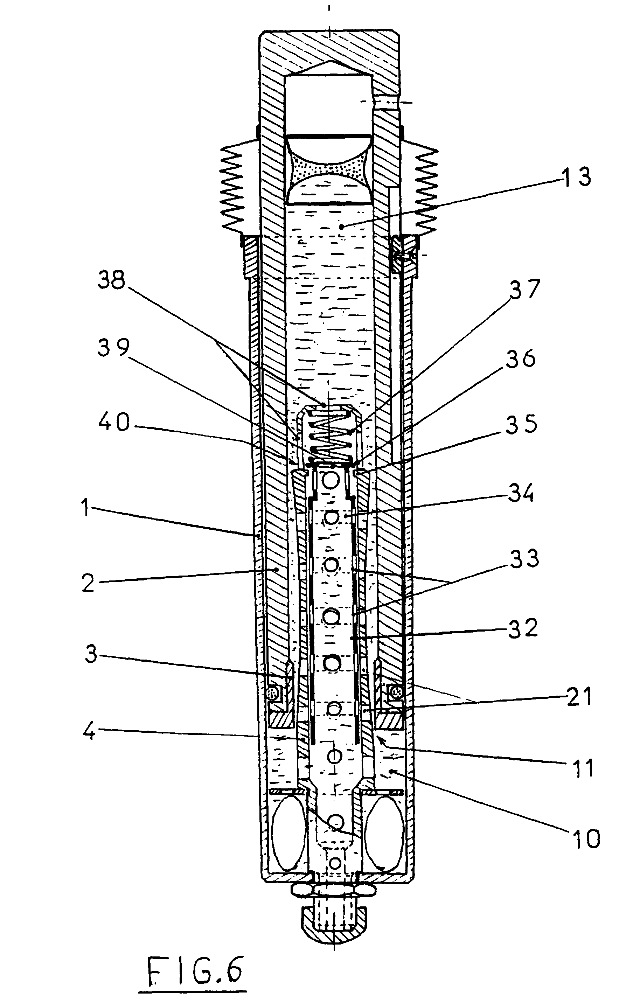

Dans la variante illustrée par la figure 6, un tiroir (32) ouvre et ferme automatiquement le passage du liquide en fonction des sollicitations, et apporte donc l'auto-régulation ; un ressort taré (37) fixe l'intensité et forme clapet de décharge.

Dans cette forme de réalisation, en position de repos, les lumières (33) du tiroir (32) sont en concordance avec les lumières (21) du régulateur. Des gorges (34) permettent la libre circulation du liquide sans avoir à diriger en rotation les lumières (33) du tiroir (32) en face des lumières (21) du régulateur (4).

Dans la position repos, la colerette (36) du tiroir (32) se trouve en appui sur le siège (35) du régulateur (4). Un ressort taré (37) maintient la colerette (36) du tiroir sur son siège (35). Lors d'une poussée trop torte sur le piston/poussoir (3)/(2), le liquide ne peut passer totalement par le canal de transfert (11) et les lumières (21) ; c'est à cet instant que, sous la pression du liquide en provenance de la réserve (10), le tiroir (32) actionne le clapet de décharge que constitue l'ensemble (4)-(32)-(37). La colerette (36) du tiroir (32) se lève du siège (35), laissant circuler, par le passage (40), une quantité supplémentaire de liquide venant de la réserve (10). Simultanément, les lumières (33) du tiroir (32) sont déplacées et de ce fait ne sont plus en parfaite concordance avec les lumières (21) du régulateur (4), ce qui freine le passage du liquide entre la réserve (10) et la chambre (13). Cette action apporte l'auto-régulation. L'amortissement dans la course retour est obtenu par le passage dans les lumières calibrées (38) et (39) d'une quantité de liquide contenue dans la chambre (13) et qui va reprendre place dans la réserve (10).

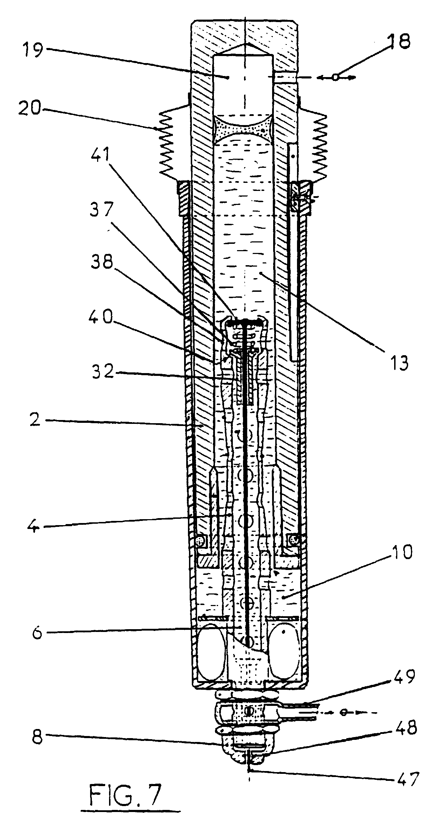

Dans la variante illustrée par la figure 7, un ressort (37) situé au sommet du régulateur (4), forme clapet de décharge. Un tirant (47) solidaire d'une coupelle (41) permet de régler le tarage du clapet de l'extérieur du dispositif, et cela même pendant son fonctionnement.

Une coupelle (41) solidaire d'un tirant (47), permet de régler la pression du ressort (37) sur le tiroir (32). Une traction exercée sur le tirant (47) augmente la résistance du clapet de décharge (4,32,37,41,47) au passage (40) du liquide hydraulique lors de son transfert de la réserve (10) à la chambre (13), ce qui a pour effet de renforcer la fermeté de l'amortissement.

Un collecteur (49) permet de remplir ou vider la quantité voulue de liquide même lorsque le dispositif est en service. Des trous débouchants effectués sur le régulateur, permettent le passage du liquide entre le canal (6) de ce dernier et le collecteur (49). Un bouchon (8) permet le passage du tirant (47) ; l'étanchéité est obtenue grâce à un joint (48) associé à tout moyen approprié.

Les exemples qui précèdent montrent bien tous les avantages apportés par l'invention, parmi lesquels on peut citer :
- l'obtention d'un amortissement modulable grâce à la torme spécifique de régulateur ;
- un effet d'amortissement obtenu sans usure de pièce ;
- une très grande simplicité du dispositif tant dans sa conception que dans son utilisation ;
- la possibilité d'un réglage individualisé possible même pendant le fonctionnement ;
- une adaptation aisée sur du matériel existant.

Bien entendu, l'invention n'est pas limitée aux exemples de réalisation décrits précédemment, mais elle en couvre toutes les variantes entrant dans le cadre des revendications.

## Revendications

1. Dispositif oléopneumatique d'amortissement modulable, avec possibilité de réglage comprenant un corps ou cylindre (1) rempli de liquide hydraulique (huile par exemple), auquel est associé un ensemble déplaçable sous l'action de contraintes extérieures et qui permet de provoquer une circulation du liquide hydraulique lors des déplacements relatifs entre ces deux parties, et dans lequel :
- l'ensemble déplaçable est constitué par un piston mobile évidé (3) dont l'action entraîne le liquide hydraulique, ce piston dont la périphérie coulisse contre la paroi interne du corps ou cylindre (1) étant monté à l'extrémité d'une tige ou poussoir (2) comportant un évidement longitudinal (13) permettant de former une chambre pour le liquide hydraulique, ledit évidement (13) renfermant du côté opposé à son extrémité ouverte un élément (17) dit "piston libre" séparant ledit liquide hydraulique d'une réserve de gaz (19);
- la circulation du liquide lors du déplacement du piston (3) - poussoir (2) sous l'action d'une contrainte, s'effectue entre une réserve (10) définie par la paroi interne du cylindre (1) et l'évidement longitudinal (13) du poussoir (2), au travers d'un canal de transfert (11) à débit variable défini par la section interne du piston (3), et la surface extérieure d'un élément "régulateur" (4) constitué par une tige de section variable dont la base est associée au corps ou cylindre (1) de l'ensemble, et dont le profil extérieur est tel que lors de l'interpénétration dudit régulateur (4) dans l'évidement interne du piston (3), permet de faire varier la section de l'espace annulaire que le liquide emprunte lors des déplacements relatifs du poussoir (2) - piston (3) par rapport à l'ensemble corps (1)/régulateur (4), caractérisé en ce que les déplacements relatifs s'effectuent de part et d'autre d'une position où l'espace annulaire est le plus important, permettant d'obtenir une variation de section apportant un amortissement modulable, par exemple progressif tout au long de la course, et ce aussi bien dans la course aller que dans la course retour;
- le régulateur (4) possédé des lumières (21) permettant le passage du liquide par l'intérieur (6) dudit régulateur pour le transfert de la réserve (10) à la chambre (13) et inversement ;
- le piston libre (17) permet de compenser les écarts de volume dus au déplacement des éléments du dispositif.

2. Dispositif selon la revendication 1, caractérisé en ce que le régulateur (4) possède un tiroir d'auto-régulation (32) maintenu par un ressort taré (37) et qui comporte des lumières (33) permettant, lorsque le tiroir se déplace, de faire varier le passage du liquide modulant l'amortissement quelle que soit la position de la course.

3. Dispositif selon la revendication 2, caractérisé en ce que un tirant (47) solidaire d'une coupelle (41) permet de régler le tarage du ressort (37) et forme un clapet de décharge réglable de l'extérieur du dispositif.

4. Dispositif selon l'une des revendications 1 à 3, caractérisé en ce que la chambre (19) renfermant le gaz est équipée d'une valve (18), permettant de régler la souplesse de suspension souhaitée.

5. Dispositif selon l'une des revendications 1 à 4, caractérisé en ce qu'il comporte entre le piston (3) et le fond du corps (1) un coussin (9) pneumatique ou élément équivalent.

6. Dispositif selon l'une des revendications 1 à 5, caractérisé en ce que des moyens sont prévus pour éviter la rotation du poussoir (2)/piston (3) à l'intérieur du corps (1), moyens constitués par exemple par une rainure (16) sur la face externe du poussoir (2), dans laquelle coulisse un patin (14) solidaire du corps, cette rainure (16) délimitant la course.

7. Dispositif selon l'une des revendications 1 à 6, caractérisé en ce que le régulateur (4) possède un canal (6) permettant le remplissage ou le vidage du liquide sans démontage du dispositif.

8. Dispositif selon l'une des revendications 1 à 7, caractérisé en ce que un collecteur (49) permet l'introduction et le retrait du liquide hydraulique même pendant le fonctionnement, ledit collecteur étant relié à une réserve annexe.

9. Utilisation d'un dispositif selon l'une des revendications 1 à 8, et tel qu'illustré par les figures 5,6 ou 7 comme élément amortisseur intégré dans la tige existante d'une selle de cycle.

10. Utilisation d'un dispositif selon l'une des revendications 1 à 8, et tel qu'illustré par les figures 5,6 ou 7 comme substitut d'un piston d'un amortisseur classique.

11. Utilisation d'un dispositif selon l'une des revendications 1 à 8, et tel qu'illustré par les figures 5,6 ou 7 pour réaliser en complément de l'effet d'amortissement la fonction de contacteur antidéflagrant pour un système de sécurité.

## Patentansprüche

1. Variable hydropneumatische Dämpfungsvorrichtung mit Regelmöglichkeit, welche ein Gehäuse oder einen Zylinder (1) umfaßt, der mit hydraulischer Flüssigkeit (zum Beispiel Öl) gefüllt ist, dem eine unter der Wirkung äußerer Lasten bewegliche Anordnung zugeordnet ist und der die Erzeugung einer Zirkulation der Hydraulikflüssigkeit während der Relativbewegungen zwischen diesen zwei Teilen ermöglicht, wobei:
- die bewegliche Anordnung aus einem beweglichen, hohlen Kolben besteht, dessen Bewegung die Hydraulikflüssigkeit mitnimmt, wobei dieser Kolben, dessen Peripherie entlang der Innenwand des Gehäuses oder Zylinders (1) gleitet, an dem Ende einer Stange oder eines Stößels (2) angebracht ist, der einen länglichen Hohlraum (13) aufweist, welcher es ermöglicht, eine Kammer für die Hydraulikflüssigkeit zu bilden, wobei der Hohlraum (13) auf der seinem offenen Ende gegenüberliegenden Seite ein «freier Kolben» genanntes Element (17) umschließt, welches die genannte Hydraulikflüssigkeit von einem Gasspeicher (19) abtrennt;
- die Zirkulation der Flüssigkeit während der Bewegung des Kolbens (3) - Stößels (2) unter Wirkung einer Last zwischen einem durch die Innenwand des Zylinders (1) gebildeten Speicher (10) und dem länglichen Hohlraum (13) des Stößels (2) durch einen Überleitungskanal (11) mit variablem Durchfluß erfolgt, der durch den inneren Querschnitt des Kolbens (3) und die äußere Oberfläche eines Regulator-Elementes (4) festgelegt ist, welches von einer Stange mit variablem Querschnitt gebildet wird, deren Basis dem Gehäuse oder Zylinder (1) der Anordnung zugeordnet ist und deren äußeres Profil derart ist, daß während des Hineinragens des genannten Regulators (4) in den inneren Hohlraum des Kolbens (3) eine Variation des Querschnitts des Ringraumes, den die Flüssigkeit während der Relativbewegungen des Stößels (2) - Kolbens (3) in bezug auf die Anordnung aus Gehäuse (1)/Regulator (4) einnimmt, ermöglicht wird,
**dadurch gekennzeichnet**, daß die Relativbewegungen zu der einen und der anderen Seite von einer Position erfolgen, in der der Ringraum am größten ist, wodurch es ermöglicht wird, eine Variation des Querschnittes zu erhalten, welche zu einer variablen Dämpfung führt, zum Beispiel zu einer entlang des gesamten Hubs progressiven Dämpfung, und zwar sowohl beim Vorhub als auch beim Rückhub;
- der Regulator (4) Öffnungen (21) aufweist, die das Hindurchtreten der Flüssigkeit durch das Innere (6) des genannten Regulators für die Überführung aus dem Speicher (10) in die Kammer (13) und umgekehrt ermöglichen;
- der freie Kolben (17) ermöglicht, die Volumenabweichungen aufgrund der Bewegungen der Elemente der Vorrichtung zu kompensieren.

2. Vorrichtung nach Anspruch 1, **dadurch gekennzeichnet**, daß der Regulator (4) einen Schieber (32) zur Selbstregulierung aufweist, der von einer tarierten Feder gehalten ist und Öffnungen (33) aufweist, die es ermöglichen, während sich der Schieber verschiebt, unabhängig von der Position des Hubs den Durchfluß der Flüssigkeit zu verändern, welcher die Dämpfung variiert.

3. Vorrichtung nach Anspruch 2, **dadurch gekennzeichnet**, daß eine Spannstange (47), welche fest mit einem Teller (41) verbunden ist, das Regeln der Tarierung der Feder (37) ermöglicht und ein von außerhalb der Vorrichtung regelbares Ausflußventil bildet.

4. Vorrichtung nach einem der Ansprüche 1 bis 3, **dadurch gekennzeichnet**, daß die das Gas umschließende Kammer (19) mit einem Ventil (18) ausgerüstet ist, welches es ermöglicht, die gewünschte Nachgiebigkeit der Federung zu regeln.

5. Vorrichtung nach einem der Ansprüche 1 bis 4, **dadurch gekennzeichnet**, daß sie zwischen dem Kolben (3) und dem Boden des Gehäuses (1) ein pneumatisches Kissen (9) oder äquivalentes Element aufweist.

6. Vorrichtung nach einem der Ansprüche 1 bis 5, **dadurch gekennzeichnet**, daß Mittel zum Vermeiden der Rotation des Stößels (2)/Kolbens (3) im Inneren des Gehäuses (1) vorgesehen sind, welche Mittel zum Beispiel durch eine Nut (16) an der Außenseite des Stößels (2), in der ein fest mit dem Gehäuse verbundener Gleitschuh (14) gleitet, bestehen, wobei diese Nut (16) den Hub begrenzt.

7. Vorrichtung nach einem der Ansprüche 1 bis 6, **dadurch gekennzeichnet**, daß der Regulator (4) einen Kanal (6) aufweist, der das Einfüllen oder Auslassen der Flüssigkeit ohne Demontage der Vorrichtung ermöglicht.

8. Vorrichtung nach einem der Ansprüche 1 bis 7, **dadurch gekennzeichnet**, daß eine Sammelleitung (49) das Einfüllen und Ablassen von Hydraulikflüssigkeit selbst während des Betriebs ermöglicht, wobei die genannte Sammelleitung mit einem angeschlossenen Speicher verbunden ist.

9. Verwendung einer Vorrichtung nach einem der Ansprüche 1 bis 8 und wie in den Figuren 5,6 oder 7 dargestellt als in eine existierende Stange eines Zweiradsattels integriertes Dämpfungselement.

10. Verwendung einer Vorrichtung nach einem der Ansprüche 1 bis 8 und wie in den Figuren 5,6 oder 7 dargestellt als Ersatz eines Kolbens eines klassischen Dämpfers.

11. Verwendung einer Vorrichtung nach einem der Ansprüche 1 bis 8 und wie in den Figuren 5,6 oder 7 dargestellt zur Verwirklichung der Funktion eines druckstoßsicheren Schalters für ein Sicherheitssystem in Ergänzung zu dem Dämpfungseffekt.

## Claims

1. Variable oleopneumatic shock absorbing device, with the possibility for adjustment, comprising a body or cylinder (1) filled with hydraulic fluid (for example oil), with which there is associated an assembly that can move under the action of external forces and which allows the hydraulic fluid to be made to circulate upon relative movements between these two parts, and in which :
- the movable assembly consists of a hollow mobile piston (3), the action of which drives along the hydraulic fluid, this piston, the periphery of which slides against the internal wall of the body or cylinder (1), being mounted at the end of a rod or push rod (2) including a longitudinal cavity (13) allowing the formation of a chamber for the hydraulic fluid, the said cavity (13) at the opposite end to its open end containing an element (17) known as a « free piston » separating the said hydraulic fluid from a reserve of gas (19) ;
- the circulation of the fluid upon the movement of the piston (3) - push rod (2) under the action of a force takes place between a reserve (10) defined by the internal wall of the cylinder (1) and the longitudinal cavity (13) of the push rod (2), through a transfer channel (11) with variable flow-rate defined by the internal cross section of the piston (3) and the external surface of a « regulator » element (4) consisting of a rod of variable cross section, the base of which is joined to the body or cylinder (1) of the assembly, and the external profile of which is such that upon interpenetration of the said regulator (4) in the internal cavity of the piston (3), allows to vary the cross section of the annular space taken up by the liquid upon relative movements of the push rod (2) - piston (3) with respect to the body (1)/regulator (4) assembly, characterized in that the relative movements take place on each side of a position in which the annular space is the largest, making it possible to obtain a variation in cross section giving shock absorption which is variable, for example gradual throughout the stroke, this being true both in the outward stroke and in the return stroke ;
- the regulator (4) has ports (21) allowing the fluids to pass through the inside (6) of the said regulator for transfer from the reserve (10) to the chamber (13) and vice versa ;
- the free piston (17) makes it possible to compensate for the differences in volume which are due to the movement of the elements of the device.

2. Device according to claim 1, characterized in that the regulator (4) has an auto-adjustment spool (32) held in place by a preloaded spring (37) and including ports (33) which, when the spool moves, allows the passage for the liquid to be varied, varying the shock absorption irrespective of the position in the stroke.

3. Device according to claim 2, characterized in that a through bolt (47) integral with a spring plate (41) allows the preload of the spring (37) to be adjusted and forms a discharge valve that can be adjusted from the outside of the device.

4. Device according to one claims 1 to 3, characterized in that the chamber (19) containing the gas is equipped with a valve (18) allowing the desired suspension softness to be adjusted.

5. Device according to one claims 1 to 4, characterized in that it includes a pneumatic cushion (9) or equivalent element between the piston (3) and the end of the body (1).

6. Device according to one claims 1 to 5, characterized in that means are provided for preventing the push rod (2)/piston (3) from rotating inside the body (1), these means consisting, for example, of a groove (16) on the external face of the push rod (2), in which groove there slides a shoe (14) integral with the body, this groove (16) delimiting the stroke.

7. Device according to one claims 1 to 6, characterized in that the regulator (4) has a channel (6) allowing the filling or emptying of the fluid without dismantling the device.

8. Device according to one claims 1 to 7, characterized in that a collector (49) allows the introduction and drawing-off of the hydraulic fluid even during operation, the said collector being connected to an auxiliary reserve.

9. Application of a device according to one of claims 1 to 8 and such illustrated by figures 5, 6 or 7 as a shock-absorbing element built into an existing bicycle or motocycle sent tube.

10. Application of a device according to one of claims 1 to 8 and such illustrated by figures 5,6 or 7 as a piston of a conventional shock absorber.

11. Application of a device according to one of claims 5, 6 or 7 for achieving, in addition to the shock-absorbing effect, the function of a flame proofing contact for a safety system.
